# EUROPÄISCHE PATENTSCHRIFT

(11) **EP 4 523 508 B1**
(45) Veröffentlichungstag und Bekanntmachung des Hinweises auf die Patenterteilung: **18.11.2026**
(21) Anmeldenummer: 24198712.2
(22) Anmeldetag: 05.09.2024
(51) Int. Cl.: A01B 69/00, H04L 12/40

(54) **LANDWIRTSCHAFTLICHE MASCHINE MIT KAMERASTEUERUNG**
AGRICULTURAL MACHINE WITH CAMERA CONTROL
MACHINE AGRICOLE AVEC COMMANDE PAR CAMÉRA

(30) Priorität: 18.09.2023 DE 102023125254; 10.11.2023 DE 102023131348
(43) Veröffentlichungstag der Anmeldung: 19.03.2025
(73) Patentinhaber: Lemken GmbH & Co KG, 46519 Alpen (DE)
(72) Erfinder: Krul, Sander, 8028 RK Zwolle (NL); Morssink-Vader, Chris, 2391 CD Hazerswoude-Dorp (NL); Katemann, Rene, 46359 Heiden (DE); van den Heuvel, Stefan, 3251 CX Stellendam (NL)

(56) Entgegenhaltungen:
- WO-A1-2015/171946
- DE-A1- 102020 134 176
- US-A1- 2015 363 982
- US-A1- 2020 269 781
- US-A1- 2021 325 868

## Beschreibung

Die Erfindung betrifft eine landwirtschaftliche Maschine gemäß dem Oberbegriff des Patentanspruches 1.

Aus dem Stand der Technik sind landwirtschaftliche Maschinen, welche insbesondere der Behandlung von in Reihen angeordneten Pflanzen dienen, bekannt. Gruppen von als Rollen, Zinken oder Schneiden ausgebildete Behandlungswerkzeuge sind zwischen den Reihen und seitlich zu diesen beabstandet angeordnet, um in den Zwischenräumen des Pflanzenbestandes beispielsweise unerwünschte Unkräuter abzuschneiden oder den Boden dazwischen zu lockern. Die Offenlegung DE102017113726A1 zeigt eine solche Maschine, welche von einem Traktor in einer Arbeitsrichtung durch den Pflanzenbestand gezogen wird. Anhand einer Kamera werden eine oder mehrere Reihen von Nutzpflanzen detektiert. Anhand dieser detektierten Reihen kann eine Sollspur bestimmt werden, welcher die Behandlungswerkzeuge folgen, ohne dabei die Pflanzen einer Pflanzenreihe zu beschädigen. Hierzu sind die Behandlungswerkzeuge an einem durch einen Aktor seitlich verschiebbaren Hilfsrahmen angeordnet. So muss der Traktor lediglich ungenau durch die Zwischenräume der Pflanzenreihen gelenkt werden. Mittels des Aktors, einer automatischen Steuerung und dem Hilfsrahmen sowie der durch die Kamera ermittelten Sollspur werden die Behandlungswerkzeuge möglichst nahe und genau an die Pflanzenreihen heran gelenkt, ohne diese zu beschädigen.

In WO2021244886A1 wird vorgeschlagen, anstelle des Hilfsrahmens den Traktor selbst und die daran befestigte Maschine mit Behandlungswerkzeugen entlang der ermittelten Sollspur zu lenken. Systeme zur Übertragung von Sensordaten sind beispielsweise aus der US 2015 363 982 A1, der US 2021 325 868 A1, der DE 10 2020 134 176 A1 und der WO 2015 171 946 A1 bekannt.

Eine weitere kameragesteuerte Maschine ist in EP 3932162 A1 offenbart. Neben der zuvor beschriebenen Solllinienführung ist hier eine Eingabe-AusgabeVorrichtung im Sichtbereich des Fahrers des Traktors angeordnet, über welche er Erkennungsparameter einstellen und anhand eines angezeigten Kamerabildes den Arbeitsprozess überwachen kann. Ebenso schlägt DE 102017130694 A1 eine Anzeige des Kamerabildes zur Information des Fahrers vor.

Generell ist die Übermittlung von Kamerabildern zu einem Display im Fahrerbereich auf analogem oder digitalem Wege sowohl per Kabel als auch drahtlos bekannt.

Um eine sichere Maschinenkontrolle durch den Bediener zu gewährleisten, bedarf es jedoch einer ausfallsicheren Verbindung zwischen Steuermodulen der landwirtschaftlichen Maschine und einem Bedienterminal im Fahrerbereich.

Dies wird bislang durch Platzierung mehrerer, voneinander unabhängigen Bedienterminals und Anzeigen im Umfeld des Fahrers erreicht, welche jedoch dessen Sichtbereich einschränken.

Aufgabe der Erfindung ist es, obige Nachteile zu beheben und eine Bedienung der landwirtschaftlichen Maschine und zugleich eine kamerabasierte Überwachung des Arbeitsprozesses durch den Fahrer zu ermöglichen.

Diese Aufgabe wird durch die Merkmale des kennzeichnenden Teiles des Anspruches 1 gelöst. Die weiteren Ansprüche enthalten vorteilhafte Ausführungsformen der Erfindung.

Eine landwirtschaftliche Maschine zur Bearbeitung eines bevorzugt in Reihenkulturen angeordneten Pflanzenbestandes oder einer Bodenoberfläche weist - bevorzugt in Gruppen - angeordnete Behandlungswerkzeuge für die Behandlung von Pflanzen oder einer Bodenoberfläche auf. Dabei weist die landwirtschaftliche Maschine zumindest eine Kameraeinheit zur Erfassung eines Bereiches von Pflanzen oder der Bodenoberfläche auf. Zudem enthält die landwirtschaftliche Maschine zumindest einen Auswerterechner zur Detektion, Abstands-, Struktur- oder Mustererkennung und/oder Eigenschaftserkennung von Pflanzen oder Bodenoberflächen aus Daten der Kameraeinheit, welche durch den Auswerterechner verarbeitet und zur Bereitstellung von neuen oder aufbereiteten Daten daraus in eine weitere Anzeige- und Bedieneinrichtung sowie weiterhin in zumindest eine Steuereinheit zur Erfassung und/oder Steuerung von Eigenschaften oder Parametern der Behandlungswerkzeuge oder der landwirtschaftlichen Maschine übertragen werden.

Dabei werden die Daten zwischen der Kameraeinheit, dem Auswerterechner und der Anzeige- und Bedieneinrichtung über einen ersten Kommunikationskanal mit einem ersten Protokollstandard und die Daten- und/oder Stellparameter zwischen der Anzeige- und Bedieneinrichtung des Auswerterechners sowie der Steuereinheit über einen zweiten Kommunikationskanal mit einem zweiten Protokollstandard übermittelt.

Die beiden Kommunikationskanäle unterscheiden sich in ihren Signaleigenschaften und zugehörigen Protokollstandards grundsätzlich und sind zueinander nicht kompatibel. Hierdurch können die Kommunikationskanäle mit ihren Signaleigenschaften und zugehörigen Protokollstandards optimal zu ihrer jeweiligen Verwendung zugeordnet werden, ohne die Nachteile eines anderen Standards in Kauf zu nehmen. Hierzu dient der erste Protokollstandard bevorzugt der Bild- und Videodaten-Übertragung und der zweite Protokollstandard bevorzugt der Übertragung von Stellsignalen und / oder Sensordaten an weitere Steuerungen, Aktoren, Anzeigevorrichtungen und Sensoren innerhalb und außerhalb der landwirtschaftlichen Maschine.

In einer bevorzugten Ausführung ist der erste Protokollstandard auf dem ersten Kommunikationskanal für eine wesentlich höhere Datenübertragungsrate als der zweite Protokollstandard auf dem zweiten Kommunikationskanal ausgelegt. Bevorzugt weist der zweite Kommunikationskanal eine Datenübertragungsrate im Kilobit-Bereich/Sekunde, weiter bevorzugt <= 500 kBit/s auf, während der erste Kommunikationskanal eine Datenübertragungsrate im Megabit-Bereich/Sekunde, weiter bevorzugt => 100mBit/s aufweist.

Insbesondere weist der erste Protokollstandard auf dem ersten Kommunikationskanal Streaming-Eigenschaften zur Übertragung von Video- oder Einzelbildsequenzen auf. Dies wird durch Auswahl der Übertragungsmedien nebst Protokollstandards aus Gruppe der Paket-vermittelnden Protokolle, insbesondere der PC-Vernetzung erreicht, beispielsweise leitungsgebunden über Ethernet- oder Glasfaser-Verbindungen und / oder drahtlos über elektromagnetische Strahlungsübertragung wie WIFI-, Bluetooth- 4G, 5G oder 6G -Mobilfunk- oder alternativer Richtfunkverfahren, weiterhin über Lichtsignalübertragung. Besonders geeignet hat sich ein Protokollstandard nach ISO 17215 zur Übertragung von Bild- und Videodaten erwiesen.

Abweichend dazu ist der zweite Protokollstandard auf dem zweiten Kommunikationskanal als Datenbus mit Echtzeiteigenschaften ausgeführt. Hierzu sind insbesondere Übertragungsverfahren aus der Gruppe CAN-, LIN oder ISOBUS, insbesondere nach den Normen ISO 11783 / J 1939 geeignet.

In einer weiteren Ausführungsform der landwirtschaftlichen Maschine weisen der Auswerterechner sowie die Anzeige- und Bedieneinrichtung jeweils zumindest eine erste Datenübertragungsschnittstelle nach dem ersten Protokollstandard sowie jeweils zumindest eine zweite Datenübertragungsschnittstelle nach dem zweiten Protokollstandard auf. Weiterhin weisen die weiteren Systemkomponenten bevorzugt lediglich eine oder mehrere Datenübertragungsschnittstellen nach einem Protokollstandard auf. Dies ist für Kameraeinheiten lediglich der erste Protokollstandard und für weitere Steuereinheiten, Sensor- oder Aktor-Module der zweite Protokollstandard, wie weiter oben vorgeschlagen. Hierdurch ergeben sich entsprechende Kostenvorteile.

In einer verbesserten Ausführungsform der landwirtschaftlichen Maschine weist der Auswerterechner zumindest eine erste Datenübertragungsschnittstelle nach dem ersten Protokollstandard auf, welche eine eigene Spannungsversorgung für zumindest eine damit verbundene Kameraeinheit aufweist. Hierdurch verringert sich der Verkabelungsaufwand und die dadurch verursachten Kosten und Störungen. Insbesondere sind eine Spannungsversorgung als POE Lösung (Power over Ethernet) oder SPE Lösung (Single pair ethernet) zur Verkabelung für diese Ausführungsform geeignet.

In einer ergänzenden Variante der landwirtschaftlichen Maschine sind zumindest der Auswerterechner oder die Steuereinheit mit einem weiteren Kommunikationsmodul verbunden, wobei das Kommunikationsmodul eine erste Datenübertragungsschnittstelle nach dem ersten Protokollstandard sowie jeweils zumindest zweite Datenübertragungsschnittstelle nach dem zweiten Protokollstandard aufweist. Damit kann die Kommunikation der verschiedenen Auswerterechner und/oder Steuereinheiten sowie weitere damit vernetzte Komponenten der landwirtschaftlichen Maschine mit einem entfernten Rechner vereinheitlicht und zentralisiert werden. Insbesondere ist diese Ausführungsform für die Datenübermittlung von oder zu dem entfernten Rechner, zur Fernwartung, Überwachung oder für Softwareupdates geeignet. Die Verbindung von oder zu dem entfernten Rechner kann über erste Datenübertragungsschnittstelle nach dem ersten Protokollstandard oder die zweite Datenübertragungsschnittstelle nach dem zweiten Protokollstandard oder über eine weitere, dritte Datenübertragungsschnittstelle mit einem von dem ersten und zweiten abweichenden Protokollstandard erfolgen.

In einer besonderen Ausführung der landwirtschaftlichen Maschine weist diese eine Anzeige- und Bedieneinrichtung mit einem ersten Anzeigebereich zur Darstellung von Bild- und/oder Videodaten sowie einen zweiten, interaktiven Anzeige- und/oder Konfigurationsbereich auf. Bevorzugt entspricht die Anzeige- und Bedieneinrichtung einem virtuellen Terminal (VT) nach ISO 11783-6. Dabei erfolgt die Datenübermittlung von der Auswerteeinheit und/oder der Kameraeinheit über den ersten Kommunikationskanal mit dem ersten Protokollstandard auf den ersten Anzeigebereich. Wahlweise erfolgt die Daten- und Signalübermittlung auf den zweiten, interaktiven Anzeige- und/oder Konfigurationsbereich durch den ersten Kommunikationskanal mit dem ersten Protokollstandard oder durch den zweiten Kommunikationskanal mit dem zweiten Protokollstandard oder zueinander ergänzend über beide Kommunikationskanäle. Hierdurch können Daten- und Signalströme aus unterschiedlichen Quellen, Kommunikationskanälen und zugehörigen Protokollen auf ein- und demselben Bildschirm der Anzeige- und Bedieneinrichtung nebeneinander oder überlagert angezeigt werden. Insbesondere können im Rahmen einer Augmented-Reality-Darstellung Bilddaten und Sensorwerte oder vereinfachte Darstellungen von errechneten Geometrien fusioniert werden.

In einer weiteren Erfindungsform ist der erste Anzeigebereich der Anzeige- und Bedieneinrichtung wahlweise und/oder gleichzeitig als ein Kameralivebild oder ein aufbereitetes Video- oder Standbild des Auswerterechners darstellend ausgebildet. Einerseits kann der Bediener unmittelbar per Live-Bild die Kamerabildqualität und den durch die Kamera erfassten Bildbereich überwachen. Andererseits ist eine vereinfachte Darstellung von erkannten Pflanzen, erkannten Pflanzenreihen oder virtuellen Führungslinien oder anderer Konturen oder Strukturen durch den Auswerterechner ermöglicht. Beispielsweise kann der Auswerterechner anhand hinterlegter Pflanzenkonturen und Bilddaten Nutzpflanzen von Schadpflanzen unterscheiden und diese entsprechend dem Bediener beispielsweise verschieden farbig oder kontrastiert anzeigen. Dies kann durch Einsatz einer Software zur Bildung eines neuronalen Netzes oder eines Systems mit künstlicher Intelligenz anhand in einem Speicher hinterlegter oder durch die Kameraeinheit neu hinzugewonnener Bilddaten sowie weiterer Parameter von Nutz- und Schadpflanzen erlernt und/ oder verbessert werden. Hierdurch kann der Bediener die Pflanzen-Erkennungsqualität des Auswerterechners kontrollieren und/oder entsprechend anpassen.

In einer weiteren Erfindungsform der landwirtschaftlichen Maschine sind zumindest ein Behandlungswerkzeug oder eine Gruppe von Behandlungswerkzeugen mit einem oder mehreren Aktoren verbunden, welche durch die Steuereinheit zumindest mittelbar mit Energie beaufschlagt werden und mit welcher die Behandlungswerkzeuge betätigt oder bewegt werden können. Dabei werden ein oder mehrere Parameter zur Betätigung oder Bewegung der Aktoren durch den Auswerterechner mittels des zweiten Protokollstandards auf dem zweiten Kommunikationskanal an die Steuereinheit übermittelt. Da der zweite Kommunikationskanal echtzeitfähig ausgebildet ist, kann eine Ansteuerung der Aktoren ohne schädliche Verzögerung unmittelbar und zielgenau ausgeführt werden.

In einer erweiterten Ausführung der landwirtschaftlichen Maschine ist zumindest ein Behandlungswerkzeug oder eine Gruppe von Behandlungswerkzeugen mit einem oder mehreren Aktoren verbunden, welche durch die Steuereinheit zumindest mittelbar mit Energie beaufschlagt werden, mit welcher die Behandlungswerkzeuge oder deren Gruppen betätigt oder bewegt und insbesondere einzeln ausgehoben werden können. Dabei ist die Steuereinheit zumindest mittelbar mit einem Positionsgeber verbunden, welcher die Betätigung oder Bewegung der Behandlungswerkzeuge oder deren Gruppen in Abhängigkeit einer vorgegebenen oder ermittelten Position des Positionsgebers auslöst. Hierdurch wird über die ermittelten Bilddaten des Auswerterechners ein weiteres, ortsgesteuertes Betätigungskriterium für die Behandlungswerkzeuge oder deren Gruppen geschaffen. Dies ist insbesondere bei ungeeigneten oder eine schlechte Qualität aufweisenden Bilddaten von Vorteil.

In einer ergänzenden oder alternativen Erfindungsform ist die landwirtschaftliche Maschine mit einem Anbaurahmen zur Befestigung oder zur Anhängung an ein Fahrzeug sowie mit einem Werkzeugrahmen zur Aufnahme von bevorzugt in Gruppen daran angeordneten Behandlungswerkzeugen ausgebildet, wobei die Behandlungswerkzeuge oder deren Gruppen in regelmäßigen Abständen relativ zum Werkzeugrahmen angeordnet sind. Dabei sind der Anbaurahmen und der Werkzeugrahmen mittels eines Aktors oder mehrerer Aktoren zumindest seitlich und relativ zueinander beweglich angeordnet. Der eine Aktor oder die Aktoren können durch die Steuereinheit zumindest mittelbar mit Energie beaufschlagt werden, mit welcher die Aktoren betätigt oder bewegt werden können. Dabei werden ein oder mehrere Parameter zur Betätigung oder Bewegung der Aktoren durch den Auswerterechner mittels des zweiten Protokollstandards auf dem zweiten Kommunikationskanal an die Steuereinheit übermittelt. Auch diese Steuerung ist echtzeitfähig und kann somit ohne schädliche Verzögerung unmittelbar und zielgenau erfolgen. Weiterhin können der oder die Aktoren manuell durch den Bediener oder über weitere gemessene Werte oder ermittelte Maschinenpositionen über den zweiten Kommunikationskanal von der Steuereinheit empfangen oder ermittelt werden sowie übersteuert und korrigiert werden. Beispielsweise seien hier GPS-Koordinaten, Wege- oder Tastsignale von Pflanzenreihentastern genannt, welche Einfluss auf die Rahmenverschiebung und somit die Lenkgenauigkeit der landwirtschaftlichen Maschine nehmen und hinzugezogen werden können.

Die Erfindung zeichnet sich insbesondere dadurch aus, dass durch Verwendung spezifischer Kommunikationsverfahren und deren Protokollstandards innerhalb der Komponentenvernetzung und Signalübertragung einer landwirtschaftlichen Maschine auf kostengünstige Standardhardware zurückgegriffen werden kann. Weiterhin wird durch Verwendung eines VT-Terminals nach ISOBUS-Standard als Anzeige- und Bedieneinrichtung eine Unabhängigkeit von proprietären Terminals erreicht. Der Bediener kann die Traktoren, auf denen ein VT-Terminal nach ISOBUS-Standard bereits installiert ist, zum Betrieb der landwirtschaftlichen Maschine beliebig wechseln.

Weitere Einzelheiten und Vorteile des Erfindungsgegenstandes ergeben sich aus der nachfolgenden Beschreibung und den zugehörigen Zeichnungen, in denen ein Ausführungsbeispiel mit den dazu notwendigen Einzelheiten und Einzelteilen dargestellt ist. Es zeigen:
Fig.1 eine landwirtschaftliche Maschine, hier ein Gerät zur Bearbeitung von Reihenkulturen, in perspektivischer Darstellung,
Fig.2 ein Schalt- und Verbindungsschema,

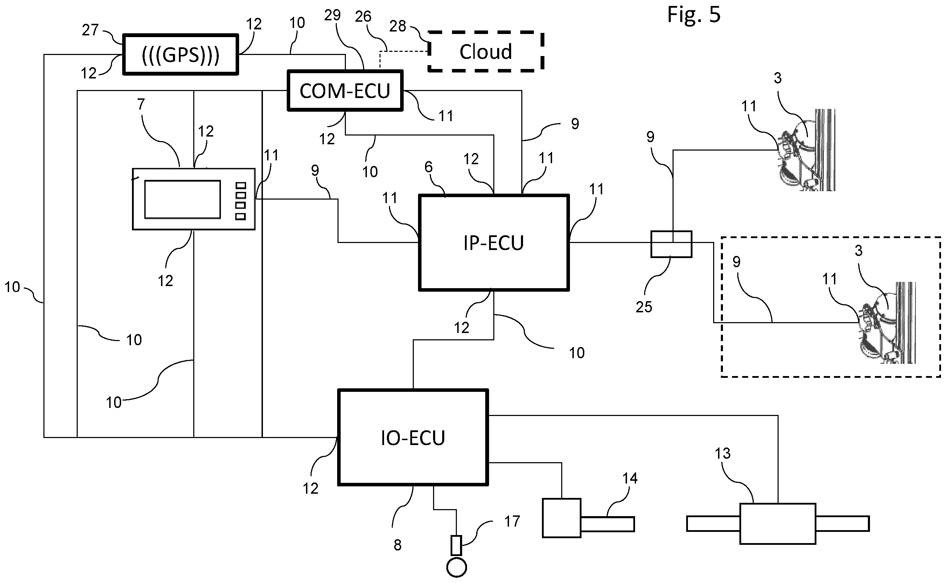

Fig.3 und Fig. 4 eine Anzeigekonfiguration einer Anzeige- und Bedieneinrichtung sowie Fig.5 ein erweitertes Schalt- und Verbindungsschema der landwirtschaftlichen Maschine.

Bei den Darstellungen handelt es sich im Wesentlichen um konkrete Ausführungsbeispiele. Die Erfindung ist hingegen nicht auf die dargestellten Ausführungsbeispiele beschränkt, sondern kann auch in fachmännischer Weise abgewandelt werden, um sie an einen bestimmten Anwendungsfall anzupassen.

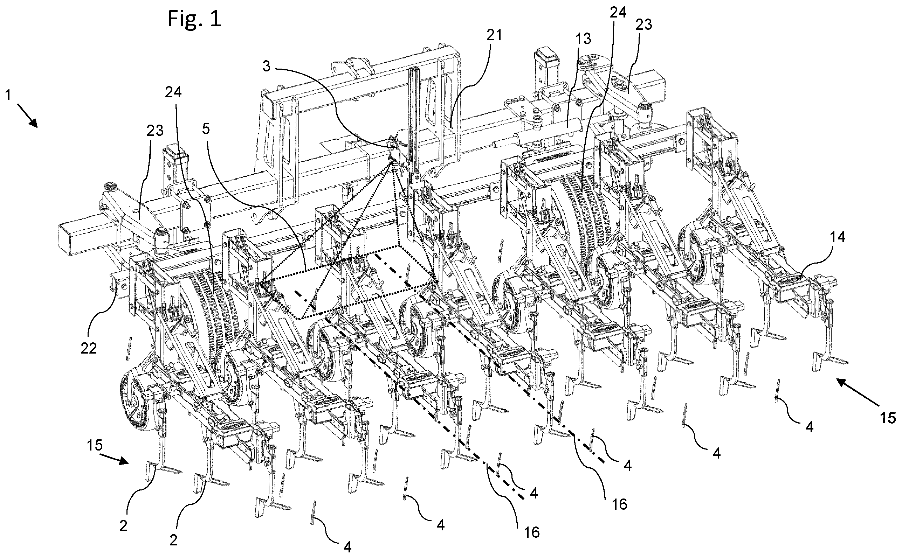

Die in Figur 1 gezeigte landwirtschaftliche Maschine 1 weist einen Anbaurahmen 21 zur Kopplung mit einem nicht dargestellten Traktor auf. Der Anbaurahmen 21 wird mittels der Stützräder 24 über den Ackerboden geführt und zugleich gegen seitliches Verschieben gesichert. Die landwirtschaftliche Maschine 1 wird mittels des Traktors oder automotiv durch eine Reihenkultur mit Nutzpflanzen bewegt. Diese sind als Pflanzen 4 entlang von zueinander seitlich beabstandeten Pflanzenreihen 16 angebaut. Die Traktorspur und die Stützräder 24 laufen bevorzugt in den Zwischenräumen zwischen den Pflanzenreihen 16, um die Pflanzen 4 nicht zu beschädigen. Mit zumindest zwei schwenkbaren Lenkern 23 ist ein Werkzeugrahmen 22 über einen Aktor 13 seitlich beweglich zu den Pflanzenreihen am Anbaurahmen 21 angeordnet. Wahlweise kann der Aktor 13 zwischen den Rahmen 21, 22 oder zwischen einen Rahmen 21, 22 und einem Lenker 23 wirksam befestigt werden. Alternativ können Gleit- oder Rollenführungen zur seitlichen Bewegungslagerung zwischen Anbaurahmen 21 und Werkzeugrahmen 22 angeordnet sein. Im vorderen Bereich des Werkzeugrahmens 22 ist zumindest eine Kameraeinheit 3 zur Erfassung eines Bereiches der Bodenoberfläche 5 und / oder der darauf aufwachsenden Pflanzen 4 angeordnet. Zumindest eine, bevorzugt mehrere Pflanzenreihen 16 können von dem dargestellten Erfassungsbereich der Kameraeinheit 3 erfasst werden. Weitere Kameraeinheiten können reihenindividuell je Pflanzenreihe 16 am Werkzeugrahmen 22 angeordnet sein. Der Werkzeugrahmen 22 trägt mehrere, in Gruppen 15 angeordnete Behandlungswerkzeuge 2. Diese können variabel und seitlich beanstandet passend zum Abstand der Pflanzenreihen 16 angeordnet werden. Die Behandlungswerkzeuge 2 sind zum Ausgleich von Bodenunebenheiten höhenbeweglich gelagert und bevorzugt zumindest je Werkzeug-Gruppe 15 mit einer Tiefenführungseinrichtung versehen. Die dargestellten Behandlungswerkzeuge 2 sind als Schneidwerkzeuge ausgebildet und können die Zwischenräume zwischen den Pflanzen 4 oder den Pflanzenreihen 16 von unerwünschten Schadpflanzen durch flächiges Abschneiden befreien und die Bodenoberfläche dazwischen lockern. Als Behandlungswerkzeuge 2 im Sinne der Erfindung verstehen sich ebenso Werkzeuge zur thermischen, hydraulischen oder chemischen Bekämpfung von Schadpflanzen, ebenso Ausbringwerkzeuge für Dünger und Pflanzenschutzmittel auf oder in die Nähe von Nutzpflanzen.

Weiterhin können einzelne Behandlungswerkzeuge 2 individuell mit einzelnen Aktoren 14 zu deren Betätigung, Aktivierung und Deaktivierung sowie zur individuellen, ein - oder mehrdimensionalen Platzierung ausgestattet werden.

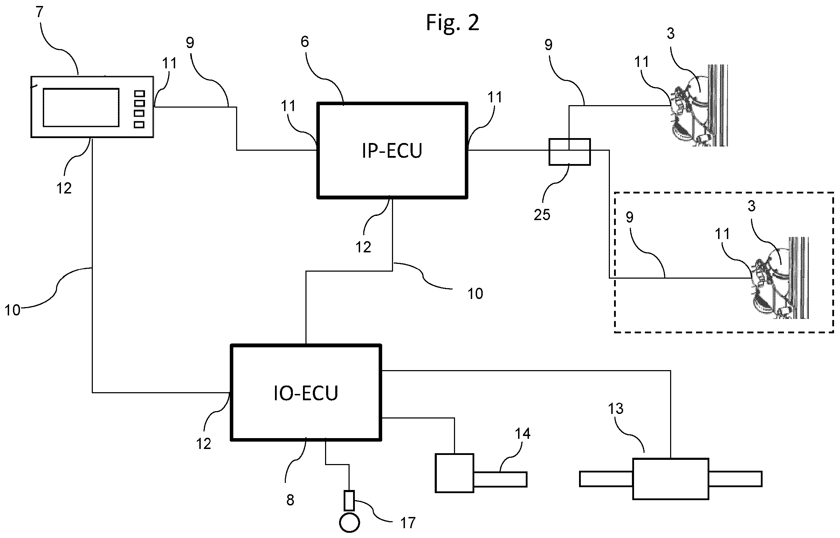

Figur 2 zeigt ein Blockschaltdiagramm der in der landwirtschaftlichen Maschine verwendeten System-, Anzeige und Bedien- sowie Steuerungskomponenten sowie deren Verbindung und Vernetzung.

Ein vornehmlich als Image-Processing-ECU ausgebildeter Auswerterechner 6 weist ein oder zwei als Ethernet-Anschluss ausgebildete Datenübertragungsschnittstellen 11 auf. Mittels eines für die Ethernet-Übertragung ausgebildeten Kommunikationskanals 9 ist dieser mit einer oder optional mehreren Kameraeinheiten 3 verbunden, welche ebenfalls einen Ethernet-Anschluss als Datenübertragungsschnittstelle 11 aufweist. Die Kameraeinheit 3 ist bevorzugt als CCD-Kamera ausgebildet und kann Aufnahmespektren im sichtbaren Lichtbereich, weiter bevorzugt aber auch darüber hinaus in den nicht sichtbaren Ultraviolett- als auch darunter in den Nah-Infrarot-, Infrarot- als auch in den Mikrowellen- oder Radarstrahlungsbereich erfassen. Erfindungsgemäß umfasst die Kameraeinheit 3 auch TOF- (time of flight) Kameras, Lidar- und Radar-Systeme. Bei Verwendung mehrerer Kameraeinheiten 3 wird die Verwendung eines Multiplexers 25 zur gleichzeitigen oder getakteten Signalübertragung, beispielsweise eines Ethernet-Switches oder -Repeaters empfohlen. Die Datenübertragungsschnittstellen 11 können kostengünstig als RJ45 Steckverbindung ausgeführt werden. Im Außenbereich haben sich jedoch spritzwassergeschützte Steckverbindungen empfohlen, insbesondere nach dem IP68 Schutzklassen- oder Industrial-Ethernet-Standard. Weiterhin können die Datenübertragungsschnittstellen 11 mit einer eigenen elektrischen Energieversorgung wie POE (Power-over-Ethernet) oder SPE (single-pairethernet) ausgestattet sein. Letzterer verbindet die Vorteile der inerten elektrischen Energieversorgung mit dem Staub- und Spritzwasserschutz aus dem Industriebereich. Erfindungsgemäß sind auch drahtlose Übertragungsmedien umfasst. Bevorzugt erfolgt die Datenübertragung über den Kommunikationskanal 9 und die Adressierung der einzelnen Datenübertragungsschnittstellen 11 im TCP/IP (Transport and Communication Protokoll / Internet-Protokoll) -Verfahren. Ein weiterer Kommunikationskanal 9 verbindet den Auswerterechner 6 über eine weitere Datenübertragungsschnittstelle 11 mit der Anzeige- und Bedieneinrichtung 7 über die zuvor beschriebenen und vorgeschlagenen Übertragungs- und Protokoll-Standards. Eine ausreichende Datenübertragungsrate oder Bandbreite vorausgesetzt, kann auch eine sternförmige Verkabelung aller Kommunikationsteilnehmer auf dem ersten Kommunikationskanal (9) mit dem ersten Protokollstandard zentral über den Multiplexer 25 erfolgen.

Weiterhin sind der Auswerterechner 6 als auch die Anzeige- und Bedieneinrichtung 7 über einen zweiten Kommunikationskanal 10 mit einem zweiten, echtzeitfähigen Protokollstandard nach ISO 11783 (ISOBUS) und der als IO-ECU ausgebildeten Steuereinheit 8 verbunden. Alternativ sind auch weitere CAN- oder LIN-BUS Varianten oder Kombinationen davon denkbar. Die Busteilnehmer 6,7,8 sowie weitere optionale Teilnehmer und deren Datenübertragungsschnittstellen 12 sind seriell miteinander verkabelt. Busendseits sind Terminierungswiderstände angeordnet. Die Busteilnehmer 6,7,8 oder weitere optionale Teilnehmer können alternativ eine Autoterminierung aufweisen, welche die Signalübertragung auf den Transmit- und Receive-Kanälen des Busses elektrisch sicherstellt. Die Steuereinheit 8 ihrerseits ist mit weiteren Signalgebern oder Sensoren 17 einerseits sowie einem oder mehreren Aktoren 13, 14 andererseits unmittelbar oder über zwischengeschaltete Ventile- oder Schalter verbunden. Eine Steuer- oder Signalübermittlung der Sensoren 17 oder Aktoren 13, 14 von der oder an die Steuereinheit 8 kann analog oder über CAN- , ISOBUS oder LIN-BUS -Verfahren erfolgen. Erforderliche Stellenergie für die Aktoren 13, 14 kann durch die Steuereinheit 8 bereit gestellt werden, alternativ durch Energiequellen elektrischer, hydraulischer oder pneumatischer Art, welche auf der landwirtschaftlichen Maschine 1 oder dem damit verbundenen Traktor vorgehalten sind.

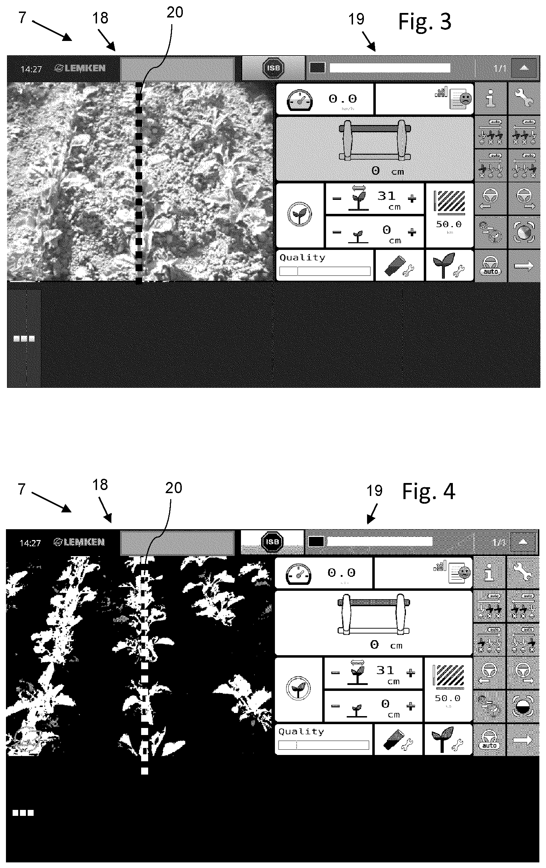

Figur 3 und 4 zeigen eine Anzeigeanordnung der Anzeige- und Bedieneinrichtung 7. Diese ist in einen Anzeigebereich 18 zur Darstellung von Bild- und Videodaten sowie Anzeige- und/oder Konfigurationsbereich 19 zur Einstellung und Überwachung von Kamera- Auswerte- und Maschinenparametern aufgeteilt.

Figur 3 zeigt eine direkte Live-Darstellung des durch die Kameraeinheit 3 aufgenommen Bildes oder Videostreams. Diese kann direkt durch die Kameraeinheit 3 oder mittels eines durch den Auswerterechner 6 replizierten Bild- oder Videostreams im Anzeigebereich dargestellt werden. Im letzteren Fall können Overlay-Daten, beispielsweise eine durch den Auswerterechner errechnete, virtuelle Führungslinie 20 in das Livebild eingeblendet werden.

Figur 4 zeigt eine durch den Auswerterechner 6 vereinfachte Darstellung des durch die Kamera aufgenommen Bildes oder Videostreams. Hier werden anstelle des Livebildes der Kameraeinheit 3 Silhouetten oder Blattformen der Pflanzen 4 dargestellt, welche durch den Auswerterechner 6 anhand hinterlegter Pflanzenformen und pflanzenspezifischen Charakteristika erkannt werden.

Wahlweise können Nutz- und Schadpflanzen voneinander verschiedenfarbig, beispielsweise in grün und rot, blau und gelb oder anderen Komplementärfarben oder in verschiedenen Kontraststufen dargestellt werden. Auch hier kann in einem Overlay eine durch den Auswerterechner errechnete virtuelle Führungslinie 20 in den Anzeigebereich 18 eingeblendet werden.

Jeweils identisch in beiden Figuren ist benachbart der Anzeige- und/oder Konfigurationsbereich 19 zur Einstellung und Überwachung von Kamera-Auswerte- und Maschinenparametern dargestellt. Alternativ können beide Bereiche 18 und 19 auch in Layern oder Ebenen übereinander gelegt werden.

Figur 4 zeigt im Vergleich zu Figur 2 ein erweitertes Blockschaltdiagramm der in der landwirtschaftlichen Maschine verwendeten System-, Anzeige und Bediensowie Steuerungskomponenten sowie deren Verbindung und Vernetzung.

Ergänzend zu Figur 2 ist ein Positionsgeber 27 zumindest mit der Steuereinheit 8 verbunden. Der Positionsgeber 27 ist bevorzugt als signallaufzeit-basiertes Messsystem, wie beispielsweise als Radar-, Lidar- oder GPS- oder GNNS-System ausgebildet, mit welchem die aktuelle örtliche Position der landwirtschaftlichen Maschine in Bezug auf den Ackerboden oder einen darauf aufstehenden Pflanzenbestand absolut und/oder relativ bestimmt werden kann.

Weiterhin ist ein Kommunikationsmodul 29 vorgesehen, welches Datenübertragungsschnittstellen 11, 12, 26 aufweist. Bevorzugt sind die Datenübertragungsschnittstelle 11 und der zugehörige Kommunikationskanal 9 nach dem Ethernet-Standard ausgebildet sowie die Datenübertragungsschnittstelle 12 und der zugehörige Kommunikationskanal 10 als echtzeitfähiges Bussystem, insbesondere als CAN-, LIN- oder ISOBUS. Die Datenübertragung an einen von der landwirtschaftlichen Maschine entfernten Rechner 28 erfolgt bevorzugt über eine drahtlose Datenübertragungsschnittstelle 26, insbesondere als WLAN, WIFI- oder Mobilfunkverbindung. Als entfernter Rechner 28 im Sinne der Erfindung ist ein temporär neben der landwirtschaftlichen Maschine befindlicher Rechner, ein Tablet-Computer oder ein Mobiltelefon zur Datenübertragung vorgesehen, ebenso aber ein stationär entfernter Bürocomputer oder ein Server oder Cloudcomputingdienst eines Dienstleisters oder in einem Rechenzentrum.

**BEZUGSZEICHENLISTE**

| | |
|---|---|
| 1 | landwirtschaftliche Maschine |
| 2 | Behandlungswerkzeug |
| 3 | Kameraeinheit |
| 4 | Pflanzen |
| 5 | Bodenoberfläche |
| 6 | Auswerterechner |
| 7 | Anzeige- und Bedieneinrichtung |
| 8 | Steuereinheit |
| 9 | Kommunikationskanal |
| 10 | Kommunikationskanal |
| 11 | Datenübertragungsschnittstelle |
| 12 | Datenübertragungsschnittstelle |
| 13 | Aktor |
| 14 | Aktor |
| 15 | Werkzeuggruppe |
| 16 | Pflanzenreihe |
| 17 | Sensor |
| 18 | Anzeigebereich |
| 19 | Anzeige- und/oder Konfigurationsbereich |
| 20 | Virtuelle Führungslinie |
| 21 | Anbaurahmen |
| 22 | Werkzeugrahmen |
| 23 | Lenker |
| 24 | Stützrad |
| 25 | Multiplexer |
| 26 | Datenübertragungsschnittstelle |
| 27 | Positionsgeber |
| 28 | Entfernter Rechner |
| 29 | Kommunikationsmodul |

## Patentansprüche

1. Landwirtschaftliche Maschine (1) zur Bearbeitung eines bevorzugt in Reihenkulturen angeordneten Pflanzenbestandes oder einer Bodenoberfläche (5), mit bevorzugt in Gruppen (15) angeordneten Behandlungswerkzeugen (2) für die Behandlung von Pflanzen (4) oder einer Bodenoberfläche (5), wobei die landwirtschaftliche Maschine (1) zumindest eine Kameraeinheit (3) zur Erfassung eines Bereiches von Pflanzen (4) oder der Bodenoberfläche (5) aufweist, wobei die landwirtschaftliche Maschine (1) zudem zumindest einen Auswerterechner (6) zur Detektion, Abstands-, Struktur- oder Mustererkennung und/oder Eigenschaftserkennung von Pflanzen (4) oder Bodenoberflächen (5) aus Daten der Kameraeinheit (3) und zur Bereitstellung von neuen oder aufbereiteten Daten daraus in eine weitere Anzeige- und Bedieneinrichtung (7) sowie weiter eine Steuereinheit (8) zur Erfassung und/oder Steuerung von Eigenschaften oder Parametern der Behandlungswerkzeuge (2) oder der landwirtschaftlichen Maschine (1) aufweist,
**dadurch gekennzeichnet,**
**dass** die Daten zwischen der Kameraeinheit (3), dem Auswerterechner (6) und der Anzeige- und Bedieneinrichtung (7) über einen ersten Kommunikationskanal (9) mit einem ersten Protokollstandard und die Daten- und/oder Stellparameter zwischen der Anzeige- und Bedieneinrichtung (7), des Auswerterechners (6) sowie der Steuereinheit (8) über einen zweiten Kommunikationskanal (10) mit einem zweiten Protokollstandard übermittelt werden.

2. Landwirtschaftliche Maschine nach Anspruch 1,
**dadurch gekennzeichnet,**
**dass** der erste Protokollstandard auf dem ersten Kommunikationskanal (9) eine höhere Datenübertragungsrate als der zweite Protokollstandard auf dem zweiten Kommunikationskanal (10) aufweist.

3. Landwirtschaftliche Maschine nach Anspruch 1 oder 2,
**dadurch gekennzeichnet,**
**dass** der erste Protokollstandard auf dem ersten Kommunikationskanal (9) Streaming-Eigenschaften aufweisend und der zweite Protokollstandard auf dem zweiten Kommunikationskanal (10) als Datenbus mit Echtzeiteigenschaften ausgeführt ist.

4. Landwirtschaftliche Maschine nach einem der vorstehenden Ansprüche,
**dadurch gekennzeichnet,**
**dass** der Auswerterechner (6) sowie die Anzeige- und Bedieneinrichtung (7) jeweils zumindest eine erste Datenübertragungsschnittstelle (11) nach dem ersten Protokollstandard sowie jeweils zumindest zweite Datenübertragungsschnittstelle (12) nach dem zweiten Protokollstandard aufweisen.

5. Landwirtschaftliche Maschine nach einem der vorstehenden Ansprüche,
**dadurch gekennzeichnet,**
**dass** der Auswerterechner (6) zumindest eine erste Datenübertragungsschnittstelle (11) nach dem ersten Protokollstandard aufweist, welche eine eigene Spannungs- oder Energieversorgung für zumindest eine damit verbundene Kameraeinheit (3) aufweist.

6. Landwirtschaftliche Maschine nach einem der vorstehenden Ansprüche,
**dadurch gekennzeichnet,**
**dass** zumindest der Auswerterechner (6) oder die Steuereinheit mit einem Kommunikationsmodul (29) verbunden ist, wobei das Kommunikationsmodul (29) eine erste Datenübertragungsschnittstelle (11) nach dem ersten Protokollstandard sowie jeweils zumindest zweite Datenübertragungsschnittstelle (12) nach dem zweiten Protokollstandard aufweist.

7. Landwirtschaftliche Maschine nach einem der vorstehenden Ansprüche,
**dadurch gekennzeichnet,**
**dass** die Anzeige- und Bedieneinrichtung (7) einen ersten Anzeigebereich zur Darstellung von Bild- und/oder Videodaten sowie einen zweiten, interaktiven Anzeige- und/oder Konfigurationsbereich aufweist, wobei die Datenübermittlung von dem Auswerterechner (6) und/oder der Kameraeinheit (3) über den ersten Kommunikationskanal (9) mit dem ersten Protokollstandard auf den ersten Anzeigebereich (18) erfolgt und die Daten- und Signalübermittlung auf den zweiten, interaktiven Anzeige- und/oder Konfigurationsbereich (19) wahlweise durch den ersten Kommunikationskanal (9) mit dem ersten Protokollstandard oder den zweiten Kommunikationskanal (10) mit dem zweiten Protokollstandard oder zueinander ergänzend über beide Kommunikationskanäle (9,10) erfolgt.

8. Landwirtschaftliche Maschine nach einem der vorstehenden Ansprüche,
**dadurch gekennzeichnet,**
**dass** der erste Anzeigebereich (18) der Anzeige- und Bedieneinrichtung (7) wahlweise und/oder gleichzeitig ein Kameralivebild oder ein aufbereitetes Video- oder Standbild des Auswerterechners (6) darstellend ausgebildet ist.

9. Landwirtschaftliche Maschine nach einem der vorstehenden Ansprüche,
**dadurch gekennzeichnet,**
**dass** zumindest ein Behandlungswerkzeug (2) oder eine Gruppe (15) von Behandlungswerkzeugen (2) mit einem oder mehreren Aktoren (14) verbunden sind, welche durch die Steuereinheit (8) zumindest mittelbar mit Energie beaufschlagt werden, mit welcher die Behandlungswerkzeuge (2) betätigt oder bewegt werden können, wobei ein oder mehrere Parameter zur Betätigung oder Bewegung der Aktoren (14) durch den Auswerterechner (6) mittels des zweiten Protokollstandards auf dem zweiten Kommunikationskanal (10) an die Steuereinheit (8) übermittelt werden.

10. Landwirtschaftliche Maschine nach einem der vorstehenden Ansprüche,
**dadurch gekennzeichnet,**
**dass** das zumindest eine Behandlungswerkzeug (2) oder eine Gruppe (15) von Behandlungswerkzeugen (2) mit einem oder mehrere Aktoren (14) verbunden sind, welche durch die Steuereinheit (8) zumindest mittelbar mit Energie beaufschlagt werden, mit welcher die Behandlungswerkzeuge (2) oder deren Gruppen (15) betätigt oder bewegt werden können, wobei die Steuereinheit (8) zumindest mittelbar mit einem Positionsgeber (27) verbunden ist, welcher die Betätigung der Behandlungswerkzeuge (2) oder deren Gruppen (15) in Abhängigkeit einer vorgegebenen oder ermittelten Position des Positionsgeber (27) auslöst.

11. Landwirtschaftliche Maschine nach einem der vorstehenden Ansprüche, mit einem Anbaurahmen (21) zur Befestigung oder zur Anhängung an ein Fahrzeug sowie einem Werkzeugrahmen (22) zur Aufnahme von bevorzugt in Gruppen (15) daran angeordneten Behandlungswerkzeugen, wobei die Behandlungswerkzeuge (2) oder deren Gruppen (15) in regelmäßigen Abständen relativ zum Werkzeugrahmen (22) angeordnet sind, wobei der Anbaurahmen (21) und Werkzeugrahmen (22) mittels eines oder mehrerer Aktoren (13) zumindest seitlich und relativ zueinander beweglich angeordnet sind,
**dadurch gekennzeichnet,**
**dass** der eine oder die Aktoren (13) durch die Steuereinheit (8) zumindest mittelbar mit Energie beaufschlagt werden, mit welcher die Aktoren (13) betätigt oder bewegt werden können, wobei ein oder mehrere Parameter zur Betätigung oder Bewegung der Aktoren (13) durch den Auswerterechner (6) mittels des zweiten Protokollstandards auf dem zweiten Kommunikationskanal (10) an die Steuereinheit (8) übermittelt werden.

## Claims

1. Agricultural machine (1) for treating a crop, preferably arranged in rows, or a soil surface (5), comprising treatment tools (2) - preferably arranged in groups (15) - for treating plants (4) or a soil surface (5), wherein the agricultural machine (1) comprises at least one camera unit (3) for capturing an area of plants (4) or the soil surface (5), wherein the agricultural machine (1) further comprises at least one evaluation computer (6) for the detection, distance, structure or pattern recognition and/or property recognition of plants (4) or soil surfaces (5) from data from the camera unit (3) and for supplying new or processed data therefrom to a further display and control device (7), as well as a control unit (8) for monitoring and/or controlling properties or parameters of the treatment tools (2) or the agricultural machine (1),
**characterised in that** the data is transmitted between the camera unit (3), the evaluation computer (6) and the display and control device (7) via a first communication channel (9) using a first protocol standard, and the data and/or control parameters are transmitted between the display and control device (7), the evaluation computer (6) and the control unit (8) via a second communication channel (10) using a second protocol standard.

2. Agricultural machine according to claim 1,
**characterised in that** the first protocol standard on the first communication channel (9) has a higher data transmission rate than the second protocol standard on the second communication channel (10).

3. An agricultural machine according to claim 1 or 2,
**characterised in that** the first protocol standard on the first communication channel (9) has streaming capabilities and the second protocol standard on the second communication channel (10) is implemented as a data bus with real-time capabilities.

4. An agricultural machine according to any of the preceding claims,
**characterised in that** the evaluation computer (6) and the display and control unit (7) each comprise at least one first data transmission interface (11) in accordance with the first protocol standard, and each comprise at least one second data transmission interface (12) in accordance with the second protocol standard.

5. An agricultural machine according to any one of the preceding claims,
**characterised in that** that the evaluation computer (6) comprises at least one first data transmission interface (11) in accordance with the first protocol standard, which has its own voltage or power supply for at least one camera unit (3) connected thereto.

6. Agricultural machine according to any one of the preceding claims,
**characterised in that** at least the evaluation computer (6) or the control unit is connected to a communication module (29), wherein the communication module (29) comprises a first data transmission interface (11) in accordance with the first protocol standard as well as, in each case, at least a second data transmission interface (12) in accordance with the second protocol standard.

7. An agricultural machine according to any one of the preceding claims,
**characterised in that** the display and control device (7) comprises a first display area for presenting image and/or video data, as well as a second, interactive display and/or configuration area, wherein data transmission from the evaluation computer (6) and/or the camera unit (3) to the first display area (18) via the first communication channel (9) using the first protocol standard, and the transmission of data and signals to the second, interactive display and/or configuration area (19) takes place either via the first communication channel (9) using the first protocol standard or the second communication channel (10) using the second protocol standard, or, in a complementary manner, via both communication channels (9, 10).

8. An agricultural machine according to any one of the preceding claims,
**characterised in that** the first display area (18) of the display and control device (7) is designed to display, either selectively and/or simultaneously, a live camera image or a processed video or still image from the evaluation computer (6).

9. An agricultural machine according to any one of the preceding claims,
**characterised in that** at least one treatment tool (2) or a group (15) of treatment tools (2) is connected to one or more actuators (14), which are (8) at least indirectly supplied with power, by means of which the treatment tools (2) can be actuated or moved , wherein one or more parameters for actuating or moving the actuators (14) are transmitted by the evaluation computer (6) to the control unit (8) via the second communication channel (10) using the second protocol standard.

10. An agricultural machine according to any one of the preceding claims,
**characterised in that** the at least one treatment tool (2) or a group (15) of treatment tools (2) is connected to one or more actuators (14), which are supplied, at least indirectly, with power by the control unit (8), whereby the treatment tools (2) or their groups (15) can be actuated or moved, wherein the control unit (8) is at least indirectly connected to a position sensor (27), which triggers the actuation of the treatment tools (2) or their groups (15) depending on a predetermined or detected position of the position sensor (27).

11. An agricultural machine according to any one of the preceding claims,
comprising a mounting frame (21) for attachment to or coupling with a vehicle, and a tool frame (22) for accommodating treatment tools arranged thereon, preferably in groups (15), wherein the treatment tools (2) or groups thereof (15) are arranged at regular intervals relative to the tool frame (22), wherein the mounting frame (21) and the tool frame (22) are arranged so as to be movable, at least laterally and relative to one another, by means of one or more actuators (13),
**characterised in that** the one or more actuators (13) are supplied, at least indirectly, with energy by the control unit (8), by means of which the actuators (13) can be actuated or moved, wherein one or more parameters for the actuation or movement of the actuators (13) are transmitted by the evaluation computer (6) via the second protocol standard on the second communication channel (10) to the control unit (8).

## Revendications

1. Machine agricole (1) destinée au traitement d'une culture, de préférence disposée en rangées, ou d'une surface de sol (5), comportant des outils de traitement (2), disposés de préférence en groupes (15), pour le traitement des plantes (4) ou d'une surface de sol (5), la machine agricole (1) comportant au moins une unité de caméra (3) destinée à capturer une zone de plantes (4) ou de la surface du sol (5), la machine agricole (1) comportant en outre au moins un ordinateur d'analyse (6) destiné à la détection, à la reconnaissance de la distance, de la structure ou des motifs et/ou à la reconnaissance des propriétés des plantes (4) ou des surfaces de sol (5) à partir des données fournies par l'unité de caméra (3) et pour transmettre des données nouvelles ou traitées à un dispositif d'affichage et de commande (7), ainsi qu'une unité de commande (8) destinée à l'acquisition et/ou à la commande des propriétés ou des paramètres des outils de traitement (2) ou de la machine agricole (1),
**caractérisé en ce que** les données sont transmises entre l'unité de caméra (3), l'ordinateur d'analyse (6) et le dispositif d'affichage et de commande (7) via un premier canal de communication (9) utilisant une première norme de protocole, et les données et/ou paramètres de réglage sont transmis entre le dispositif d'affichage et de commande (7), l'ordinateur d'analyse (6) ainsi que l'unité de commande (8) sont transmises via un deuxième canal de communication (10) utilisant une deuxième norme de protocole.

2. Machine agricole selon la revendication 1,
**caractérisée en ce que** la première norme de protocole sur le premier canal de communication (9) présente un débit de transmission de données supérieur à celui de la deuxième norme de protocole sur le deuxième canal de communication (10).

3. Machine agricole selon la revendication 1 ou 2,
**caractérisée en ce que** la première norme de protocole sur le premier canal de communication (9) présente des propriétés de streaming et que la deuxième norme de protocole sur le deuxième canal de communication (10) est conçue comme un bus de données doté de propriétés en temps réel.

4. Machine agricole selon l'une des revendications précédentes,
**caractérisée en ce que** l'ordinateur d'analyse (6) ainsi que le dispositif d'affichage et de commande (7) comportent chacun au moins une première interface de transmission de données (11) conforme à la première norme de protocole, ainsi qu'au moins une deuxième interface de transmission de données (12) conforme à la deuxième norme de protocole.

5. Machine agricole selon l'une des revendications précédentes,
**caractérisée en ce que** l'ordinateur d'analyse (6) comporte au moins une première interface de transmission de données (11) conforme à la première norme de protocole, laquelle comporte sa propre alimentation en tension ou en énergie pour au moins une unité de caméra (3) qui y est raccordée.

6. Machine agricole selon l'une des revendications précédentes,
**caractérisée en ce qu'**au moins l'ordinateur d'analyse (6) ou l'unité de commande est relié(e) à un module de communication (29), le module de communication (29) comportant une première interface de transmission de données (11) conforme à la première norme de protocole ainsi qu'au moins une deuxième interface de transmission de données (12) conforme à la deuxième norme de protocole.

7. Machine agricole selon l'une des revendications précédentes,
**caractérisée en ce que** le dispositif d'affichage et de commande (7) comporte une première zone d'affichage destinée à la représentation de données d'image et/ou vidéo ainsi qu'une deuxième zone d'affichage et/ou de configuration interactive, la transmission de données depuis l'ordinateur d'analyse (6) et/ou de l'unité caméra (3) vers la première zone d'affichage (18) s'effectue via le premier canal de communication (9) selon la première norme de protocole, et la transmission de données et de signaux vers la deuxième zone d'affichage et/ou de configuration interactive (19) s'effectue au choix par le premier canal de communication (9) selon la première norme de protocole ou par le deuxième canal de communication (10) selon la deuxième norme de protocole, ou de manière complémentaire par les deux canaux de communication (9, 10).

8. Machine agricole selon l'une des revendications précédentes,
**caractérisée en ce que** la première zone d'affichage (18) du dispositif d'affichage et de commande (7) est conçue pour afficher, au choix et/ou simultanément, une image en direct provenant d'une caméra ou une vidéo ou une image fixe traitée par l'ordinateur d'analyse (6).

9. Machine agricole selon l'une des revendications précédentes,
**caractérisée en ce qu'**au moins un outil de traitement (2) ou un groupe (15) d'outils de traitement (2) est relié à un ou plusieurs actionneurs (14) qui sont alimentés, au moins indirectement, par l'unité de commande (8) au moins indirectement alimentés en énergie, grâce à laquelle les outils de traitement (2) peuvent être actionnés ou déplacés de maniè , un ou plusieurs paramètres relatifs à l'actionnement ou au déplacement des actionneurs (14) étant transmis par l'ordinateur d'évaluation (6) à l'unité de commande (8) via le deuxième canal de communication (10) selon la deuxième norme de protocole.

10. Machine agricole selon l'une des revendications précédentes,
**caractérisée en ce que** ledit au moins un outil de traitement (2) ou un groupe (15) d'outils de traitement (2) est relié à un ou plusieurs actionneurs (14), lesquels sont alimentés, au moins indirectement, par l'unité de commande (8) en énergie permettant d'actionner ou de déplacer les outils de traitement (2) ou leurs groupes (15) peuvent être actionnés ou déplacés, l'unité de commande (8) étant reliée au moins indirectement à un capteur de position (27) qui déclenche l'actionnement des outils de traitement (2) ou de leurs groupes (15) en fonction d'une position prédéfinie ou déterminée du capteur de position (27).

11. Machine agricole selon l'une des revendications précédentes,
comportant un châssis d'attelage (21) destiné à être fixé ou attelé à un véhicule, ainsi qu'un châssis porte-outils (22) destiné à recevoir des outils de traitement disposés de préférence en groupes (15) sur celui-ci, les outils de traitement (2) ou leurs groupes (15) sont disposés à intervalles réguliers par rapport au châssis porte-outils (22), le châssis de montage (21) et le châssis porte-outils (22) étant agencés de manière à pouvoir se déplacer au moins latéralement et l'un par rapport à l'autre au moyen d'un ou de plusieurs actionneurs (13),
**caractérisé en ce que** le ou les actionneurs (13) sont alimentés, au moins indirectement, par l'unité de commande (8) en énergie permettant d'actionner ou de déplacer les actionneurs (13), un ou plusieurs paramètres relatifs à l'actionnement ou au déplacement des actionneurs (13) étant transmis par l'ordinateur d'évaluation (6) sont transmis à l'unité de commande (8) via le deuxième canal de communication (10) au moyen de la deuxième norme de protocole.
